# FASCICULE DE BREVET EUROPEEN

(11) **EP 3 053 306 B1**
(45) Date de publication et mention de la délivrance du brevet: **19.08.2020**
(21) Numéro de dépôt: 14796201.3
(22) Date de dépôt: 25.09.2014
(51) Int. Cl.: H04L 12/24

(54) **TECHNIQUE D'ADMINISTRATION A DISTANCE D'UN DISPOSITIF APPARTENANT A UN RESEAU PRIVE**
VERFAHREN ZUR FERNVERWALTUNG EINER ZU EINEM PRIVATEN NETZWERK GEHÖRENDEN VORRICHTUNG
TECHNIQUE FOR REMOTE ADMINISTRATION OF A DEVICE BELONGING TO A PRIVATE NETWORK

(30) Priorité: 30.09.2013 FR 1359401
(43) Date de publication de la demande: 10.08.2016
(73) Titulaire: ORANGE, 75015 Paris (FR)
(72) Inventeur: DOUET, Marc, F-38340 Voreppe (FR); OULAHAL, Nordine, F-38100 Grenoble (FR)
(86) Numéro de dépôt international: PCT/FR2014/052413
(87) Numéro de publication internationale: WO 2015/044603

(56) Documents cités:
- US-A1- 2010 272 057
- US-A1- 2012 122 422
- US-A1- 2012 282 900

## Description

L'invention se rapporte au domaine général des télécommunications.

L'invention concerne plus particulièrement l'administration et la maintenance à distance de dispositifs d'un réseau de communication privé à partir d'un équipement d'administration.

Il s'agit par exemple d'équipements ou dispositifs localisés dans un site client, également appelés CPE, pour « Customer Premise Equipment », et connectés à un réseau de communication étendu, tel que le réseau Internet, par l'intermédiaire d'une passerelle d'accès. Pour un réseau local, il s'agit notamment de la passerelle d'accès, d'un décodeur TV « Set-Up-Box »), d'un terminal mobile. Dans le contexte d'un réseau domotique, il s'agit également d'équipements d'électroménager, de systèmes d'alarme, de capteurs.

Afin de garantir des services de qualité, il est préférable qu'un opérateur du réseau de communication étendu puisse gérer à distance de tels dispositifs.

La gestion à distance des dispositifs nécessite notamment :
- de détecter et de connaitre les dispositifs présents dans le réseau local, par exemple leurs numéros de série, leurs versions matérielle et logicielle ;
- de superviser ces dispositifs, par exemple en obtenant des informations de supervision et des indicateurs de performance.

La gestion à distance des dispositifs d'un réseau local s'appuie sur un rapport technique élaboré par le Broadband Forum, TR-069 « CPE WAN Management Protocol ». Ce rapport technique définit un protocole CWMP, permettant la communication entre un équipement d'auto-configuration distant ACS (pour « Auto-configuration Server ») et un dispositif du réseau local. Le protocole CWMP définit un mécanisme qui permet notamment une auto-configuration sécurisée des équipements du réseau local et d'autres fonctions de gestion de ces dispositifs.

Il est notamment possible à l'opérateur du réseau d'effectuer des interventions à distance, telles que :
- mettre à jour le logiciel (« software ») ou le microcode (« firmware ») d'un dispositif, lorsqu'une évolution de la version logicielle ou du microcode est requise ;
- effectuer un diagnostic lorsqu'un dispositif présente un disfonctionnement ;
- installer et configurer dynamiquement de nouveaux services ;
- superviser l'état et les performances d'un dispositif.

Le protocole CWMP prévoit que le dispositif du réseau local établit sous certaines conditions une connexion avec l'équipement d'auto-configuration ACS et une procédure « Inform RPC » est exécutée. Au cours de cette procédure, le dispositif du réseau local transmet des données d'administration, en particulier une adresse universelle ou URL (pour « Uniform Ressource Locator ») dans le réseau de communication étendu, notée ConnectionRequestURL. En effet, le protocole CWMP prévoit qu'un établissement de session est toujours à l'initiative du dispositif du réseau local. L'équipement d'auto-configuration ACS peut déclencher cet établissement de session en demandant à un dispositif du réseau local de l'initier. A cet effet, l'équipement d'auto-configuration ACS transmet une requête GET selon le protocole http (pour « Hyper Text Transfer Protocol ») à l'adresse universelle ConnectionRequestURL. Sur réception de cette requête et lorsqu'elle est valide, le dispositif du réseau local établit une session avec l'équipement d'auto-configuration en se présentant avec un événement « 6 CONNECTION REQUEST ».

Par ailleurs il est désormais possible d'accéder au réseau Internet par un réseau d'accès mobile de troisième génération 3G ou bien de quatrième génération 4G ou LTE pour « Long Term Evolution » dans des conditions proches de ce qu'il est possible d'obtenir par l'intermédiaire d'un réseau d'accès fixe de type ADSL ou bien Fibre. Le réseau privé peut en particulier être un réseau d'accès mobile pour lequel une passerelle LTE (« Gateway LTE ») fournit un accès au réseau Internet. Il est possible d'appliquer également les mécanismes définis dans le rapport technique TR-069 pour gérer à distance ces passerelles LTE. Toutefois, il est souvent constaté que les opérateurs des réseaux mobiles n'attribuent pas d'adresse publique à des dispositifs ou terminaux mobiles connectés au réseau mobile. Le dispositif mobile va fournir lors de la procédure RPC Inform une adresse privée en tant qu'adresse universelle ConnectionRequestURL. Il n'est alors pas possible de déclencher un établissement de session pour un tel dispositif mobile.

Il existe des méthodes pour transmettre la demande de connexion lorsque le dispositif à administrer est situé dans un réseau privé, telle que la traversée d'un équipement de translation d'adresse STUN (pour « Simple Traversai of UDP through NATs ») défini par le document RFC 3489 de l'IETF ou bien l'utilisation d'un protocole UPnP-IGD (pour « Universal Plug and Play Internet Gateway Device »). Toutefois, ces méthodes sont complexes à mettre en œuvre et nécessitent des mises à jour aussi bien des passerelles que des dispositifs du réseau local.

Le document de brevet US2012/282900 décrit des sessions de gestion selon le protocole CWMP entre une unité mobile et une station de contrôle TR-069.

Un des buts de l'invention est de remédier à des insuffisances/inconvénients de l'état de la technique et/ou d'y apporter des améliorations.

Selon un premier aspect, l'invention a pour objet un procédé d'administration à distance par un équipement d'administration d'un dispositif appartenant à un réseau de communication privé selon la revendication 1.

Corrélativement, selon un deuxième aspect, l'invention a pour objet un procédé d'établissement d'une session par un dispositif appartenant à un réseau de communication privé avec un équipement d'administration pour une administration à distance dudit dispositif selon la revendication 4.

Le dispositif du réseau de communication privé fournit à l'équipement d'administration un autre moyen permettant de déclencher un établissement de session à l'initiative du dispositif, en complément d'un envoi d'une demande de connexion à une adresse universelle. Cet autre moyen correspond à un envoi d'une demande de connexion à un numéro de contact par l'intermédiaire d'un réseau de signalisation, distinct du réseau d'accès. Ainsi, il est possible de déclencher un établissement de session par l'intermédiaire du réseau d'accès pour les dispositifs du réseau privé disposant d'un tel numéro de contact de manière simple.

L'invention tire son origine d'un inconvénient constaté pour des dispositifs d'un réseau privé ne disposant pas d'une adresse universelle publique. Toutefois, les procédés d'administration et d'établissement de session peuvent être mis en œuvre pour l'ensemble des dispositifs du réseau privé, disposant de cet autre moyen.

Cet autre moyen est par exemple activé systématiquement, en l'absence de réponse à une demande de connexion transmise à l'adresse universelle par l'intermédiaire du réseau d'accès ou bien lorsque le dispositif n'est pas joignable à l'adresse universelle par l'intermédiaire du réseau d'accès. Il est ainsi possible d'améliorer le mécanisme de déclenchement d'un établissement de session.

Par ailleurs, aucune modification n'est nécessaire au niveau d'une passerelle d'accès au réseau privé. Seuls les logiciels du dispositif et de l'équipement d'administration doivent être modifiés. Il est ainsi particulièrement simple de mettre en œuvre les procédés décrits précédemment.

Les différents modes ou caractéristiques de réalisation mentionnés ci-après peuvent être ajoutés indépendamment ou en combinaison les uns avec les autres, aux étapes du procédé d'administration tel que défini précédemment.

Dans un mode de réalisation particulier du procédé d'administration, la transmission de la demande de connexion au moyen du numéro de contact reçu est effectuée lorsque ladite adresse à utiliser est une adresse privée dans le réseau privé.

Cet autre moyen est activé lorsque la première donnée de connexion correspond à une adresse privée dans le réseau privé. Une demande de connexion transmise à cette adresse privée n'est pas routable par les différents réseaux.

Dans un mode de réalisation particulier du procédé d'administration, une donnée d'identification est associée à la demande de connexion, ladite donnée d'identification permettant au dispositif de vérifier que la demande de connexion a été envoyée par l'équipement d'administration.

Corrélativement, dans un mode de réalisation particulier du procédé d'établissement de session, préalablement à l'établissement de la session, le dispositif vérifie à l'aide d'une information d'identification associée à la demande de connexion que la demande de connexion reçue a été envoyée par l'équipement d'administration.

L'identification de l'origine de la demande de connexion permet d'augmenter la sécurité lors de la mise en œuvre des procédés d'administration et d'établissement de session.

Selon un troisième aspect, l'invention concerne également un équipement d'administration à distance d'un dispositif appartenant à un réseau de communication privé selon la revendication 6.

Les avantages énoncés pour le procédé d'administration selon le premier aspect sont transposables directement à l'équipement d'administration.

Selon un quatrième aspect, l'invention concerne également un dispositif appartenant à un réseau de communication privé, agencé pour être administré à distance par un équipement d'administration selon la revendication 7.

Les avantages énoncés pour le procédé d'établissement de session selon le deuxième aspect sont transposables directement au dispositif à administrer.

Selon un cinquième aspect, l'invention concerne un programme pour un équipement d'administration, comprenant des instructions de code de programme destinées à commander l'exécution des étapes du procédé d'administration précédemment décrit, lorsque ce programme est exécuté par cet équipement d'administration et un support d'enregistrement lisible par un équipement d'administration sur lequel est enregistré un programme pour un équipement.

Les avantages énoncés pour le procédé d'administration selon le premier aspect sont transposables directement au programme pour un équipement d'administration et au support d'enregistrement.

Selon un sixième aspect, l'invention concerne un programme pour un dispositif à administrer, comprenant des instructions de code de programme destinées à commander l'exécution des étapes du procédé d'établissement de session précédemment décrit, lorsque ce programme est exécuté par ce dispositif et un support d'enregistrement lisible par un dispositif à administrer sur lequel est enregistré un programme pour un dispositif.

Les avantages énoncés pour le procédé d'établissement de session selon le deuxième aspect sont transposables directement au programme pour un dispositif à administrer et au support d'enregistrement.

L'invention sera mieux comprise à l'aide de la description suivante de modes de réalisation particuliers de la technique d'administration à distance d'un dispositif, en référence aux dessins annexés sur lesquels :
- la figure 1 représente un système d'administration à distance dans un réseau de communication ;
- la figure 2 illustre des étapes des procédés d'administration et d'établissement de session selon un mode particulier de réalisation ;
- la figure 3 représente un dispositif à administrer selon un mode particulier de réalisation ;
- la figure 4 représente un équipement d'administration selon un mode particulier de réalisation.

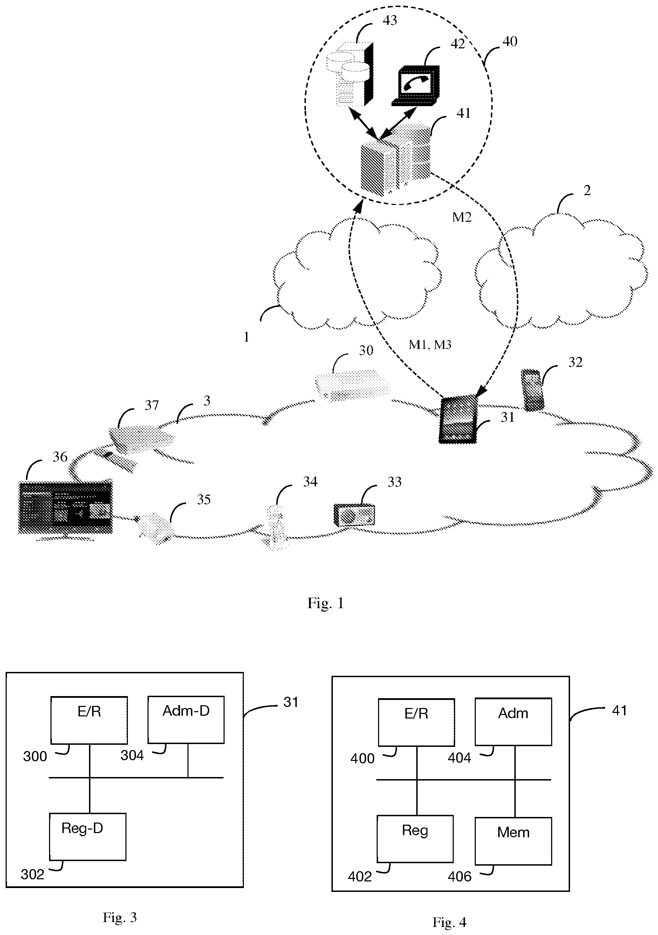

La figure 1 représente, dans son environnement, un réseau de communication privé ou local 3 administré à distance par un système d'administration 40. Le protocole IP (pour « Internet Protocol ») est utilisé par les dispositifs dans le réseau privé pour communiquer entre eux et également pour communiquer avec un réseau de communication étendu ou WAN (pour « Wide Area Network »), tel que le réseau Internet.

Pour l'environnement représenté à la figure 1, on entend par réseau de communication local 3 un réseau de type LAN (« Local Access Network »). Ce réseau peut être en particulier un réseau domestique ou un réseau d'entreprise. Une passerelle d'accès 30 est agencé pour fournir à des dispositifs du réseau local 3 un accès vers le réseau de communication étendu (par exemple Internet) par l'intermédiaire d'un réseau d'accès 1. Le réseau d'accès 1 est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home »). Aucune limitation n'est attachée au type du réseau d'accès 1.

Le réseau local 3 peut être aussi bien un réseau filaire de type Ethernet, selon la norme IEEE 802.3, qu'un réseau sans fil de type Wi-Fi, selon la norme IEEE 802.11 ou bien encore un réseau par courant porteur en ligne CPL.

Les dispositifs 31-37 du réseau local 3 peuvent être n'importe quels dispositifs, par exemple domestiques, disposant d'une connexion réseau filaire ou sans-fil. A titre d'exemples illustratifs, différents dispositifs sont représentés sur la figure 1. Il peut s'agir par exemple, d'un ordinateur, d'une tablette tactile 31, d'un téléphone mobile 32, d'un poste de radio connecté 33, d'un téléphone fixe 34, d'un rétroprojecteur 35, d'une télévision 36, d'un décodeur TV 37 (« Set-Top Box »), d'une console de jeux, de dispositifs électroménagers, etc.

Les dispositifs 31-37 du réseau local 3 disposent dans le réseau local 3 d'une adresse dite privée. La passerelle 30 est alors agencée pour mettre en œuvre une translation d'adresse privée en adresse publique et réciproquement.

Le système d'administration 40 regroupe une pluralité d'équipements permettant à l'opérateur du réseau de communication d'administrer et de superviser des dispositifs, notamment des dispositifs appartenant à des réseaux locaux. Le système d'administration 40 comprend notamment un équipement d'administration 41 également appelé serveur d'auto-configuration ACS (pour « Auto-Configuration Server »), un centre d'appel 42 et des centres de support 43 opérationnels (OSS, pour « Operational Support System ») ou orientés métiers (BSS, pour « Business Support System »).

Dans le mode de réalisation décrit, l'administration des dispositifs 31-37 et de la passerelle 30 du réseau de communication local 3 est réalisée à distance par l'équipement d'administration 41, situé en dehors du réseau local 3 et communiquant avec les dispositifs du réseau local 3 par l'intermédiaire du réseau d'accès 1 et de la passerelle 30. L'équipement d'administration dialogue avec les dispositifs 30-37 du réseau local 3 en vue de leur administration selon le protocole de gestion à distance CWMP (« CPE WAN Management Protocol ») défini dans le rapport technique TR-069 élaboré par le Broadband Forum.

Au moyen du protocole CWMP, l'équipement d'administration 41 peut notamment :
- obtenir et gérer à distance un état du réseau local 3, des dispositifs 30-37 qui lui sont connectés ;
- initier des tests de diagnostics ;
- télécharger des fichiers de logiciel ou de microcode et
- gérer des événements.

L'application d'administration à distance utilise le protocole CWMP et s'appuie sur des couches protocolaires TCP/IP, SSL/TLS, HTTP, SOAP, RPC Methods.

Le rapport technique TR-069 prévoit qu'un dispositif 30-37 du réseau local 3 établit sous certaines conditions une connexion avec l'équipement d'administration 41 et une procédure « Inform RPC » est exécutée. Au cours de cette procédure, le dispositif 30-37 du réseau local 3 transmet différentes données d'administration le concernant par l'intermédiaire du réseau d'accès 1. Les données d'administration reçues lors de cette procédure « Inform RPC » sont mémorisées dans une base de données (non représentée sur la figure 1) et permettent ensuite à l'équipement d'administration 41 de réaliser différentes tâches de gestion du dispositif par l'intermédiaire du réseau d'accès 1. Les données d'administration comprennent en particulier une donnée de connexion. Cette donnée de connexion correspond à une adresse universelle ou URL notée ConnectionRequestURL. Cette adresse universelle est prévue pour permettre à l'équipement d'administration 41 de transmettre au dispositif du réseau local une demande de connexion à cette adresse selon le protocole http. Cette demande de connexion permet de déclencher un établissement de session par le dispositif à administrer avec l'équipement d'administration par l'intermédiaire du réseau d'accès 1.

On souligne ici que, dans le cas particulier des dispositifs 31-37 du réseau local 3, la donnée de connexion, c'est-à-dire l'adresse universelle ConnectionRequestURL, correspond à une adresse IP privée allouée au dispositif dans le réseau local 3.

Certains des dispositifs du réseau local 3 sont également agencés pour communiquer directement avec le réseau de communication Internet par l'intermédiaire d'un deuxième réseau d'accès 2, distinct du réseau d'accès 1, par l'intermédiaire duquel l'équipement d'administration et les dispositifs à administrer communiquent. Par directement, on comprend que la passerelle 30 n'intervient pas dans ces échanges, ni le réseau d'accès 1. Le deuxième réseau d'accès 2 est par exemple un réseau mobile de troisième ou de quatrième génération 3GPP. A cet effet, ces dispositifs du réseau local 3 comprennent notamment une carte d'identification d'abonné USIM (pour « Universai Subscriber Identity Module »). A cette carte d'identification d'abonné est associé un numéro d'abonné MSISDN (pour « Mobile Subscriber Integrated Services Digital Network Number »). Ce numéro d'abonné est appelé par la suite numéro de contact. A titre d'exemple illustratif, la tablette 31 et le terminal mobile 32, disposant d'un moyen de communication direct avec le réseau de communication Internet, correspondent à ce type de dispositif. Il est ainsi possible de contacter directement le dispositif associé à ce numéro de contact par l'intermédiaire du deuxième réseau d'accès 2. Dans un mode de réalisation particulier, la passerelle 30 est également équipée d'une carte d'identification d'abonné.

Par la suite, dans le cadre de la mise en œuvre du procédé d'administration, le deuxième réseau d'accès 2 est utilisé uniquement pour transmettre un message de signalisation à un dispositif du réseau local au moyen d'un canal de signalisation. Il est ainsi appelé réseau de signalisation.

Dans le mode de réalisation décrit, l'équipement d'administration 41 est également agencé pour déclencher la transmission par l'intermédiaire du réseau de signalisation d'un message de signalisation portant une demande de connexion. L'équipement d'administration 41 peut lui-même disposer d'une carte d'identification d'abonné de type « embedded SIM ». Dans un autre mode de réalisation, l'équipement d'administration 41 s'interface avec un autre équipement, agencé pour transmettre le message de signalisation dans le réseau de signalisation.

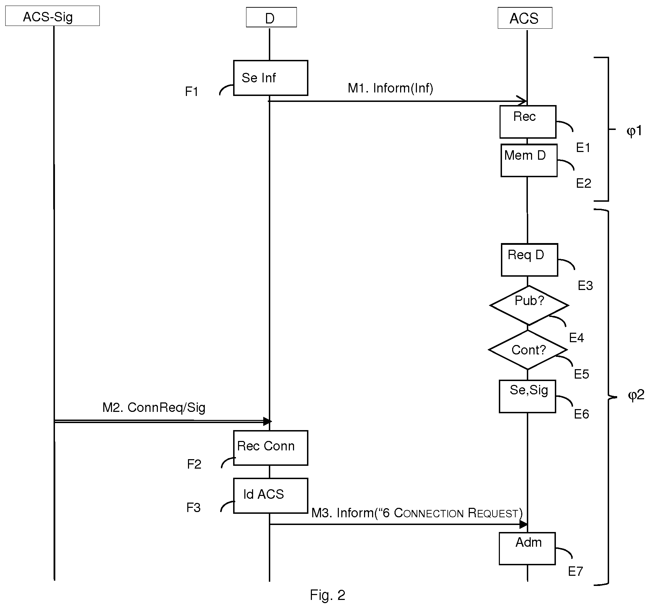

Nous allons maintenant décrire la technique d'administration dans un mode particulier de réalisation, tel qu'elle est mise en œuvre par l'équipement d'administration et un dispositif du réseau local dans l'environnement de la figure 1, en relation avec la figure 2.

La première phase ϕ1 représentée à la figure 2 représente des étapes du procédé d'administration mises en œuvre par l'équipement de configuration 41 et des étapes du procédé d'établissement de session mises en œuvre par un dispositif 31 du réseau local 3. Cette phase correspond à une phase d'enregistrement du dispositif dans la base de données de l'équipement d'administration 41 lors de l'exécution d'une procédure « Inform RPC » par l'intermédiaire du réseau d'accès 1. On se place par la suite dans le cas où le dispositif exécutant les étapes de cette phase d'enregistrement est équipé d'une carte d'identification d'abonné et dispose d'un numéro de contact pour le joindre par l'intermédiaire du deuxième réseau d'accès 2.

Dans une étape F1 du procédé d'établissement de session, le dispositif 31, 32 du réseau local 3 transmet par l'intermédiaire du réseau d'accès 1 à l'équipement d'administration 41 des données d'administration le concernant, comprenant des données de connexion. Une première donnée de connexion correspond à l'adresse universelle ConnectionRequest. Une deuxième donnée de connexion correspond au numéro de contact dans le réseau de signalisation 2 du dispositif. Cette transmission est représentée de manière simplifiée sur les figures 1 et 2 sous la forme d'un message M1 transmis du dispositif à l'équipement d'administration 41. Il est ici souligné que cette transmission correspond à une pluralité d'échanges entre le dispositif du réseau local et l'équipement d'administration 41 conformément au rapport technique TR-069. La deuxième donnée de connexion, c'est-à-dire le numéro de contact dans le réseau de signalisation, est par exemple transmise dans l'objet « InternetGatewayDevice.ManagementServer », cet objet comprenant les paramètres relatifs à l'association du dispositif du réseau local avec l'équipement d'administration 41.

Les données d'administration concernant le dispositif sont reçues par l'équipement d'administration 41 dans une étape E1 du procédé d'administration et mémorisées dans une étape E2 de ce procédé dans la base de données de l'équipement d'administration 41 en association avec un identifiant du dispositif concerné. L'équipement d'administration 41 mémorise ainsi également dans la base de données le numéro de contact dans le réseau de signalisation.

La phase d'enregistrement du dispositif 31, 32 dans la base de données de l'équipement d'administration 41 se termine. A chaque modification d'une donnée d'administration, cette phase est de nouveau exécutée à l'initiative du dispositif du réseau local 3.

La deuxième phase ϕ2 représentée à la figure 2 représente des étapes du procédé d'administration mises en œuvre par l'équipement de configuration 41 et des étapes du procédé d'établissement de session mises en œuvre par le dispositif 31 du réseau local 3. Cette phase correspond à une phase d'établissement de session entre l'équipement de configuration 41 et le dispositif du réseau local, à l'initiative du dispositif du réseau local. Elle est déclenchée par l'équipement d'administration lorsqu'une opération d'administration doit être effectuée pour le dispositif du réseau local, dit dispositif à administrer.

On rappelle ici que le protocole CWMP prévoit qu'un établissement de session est à l'initiative du dispositif du réseau local. L'équipement d'administration peut déclencher cet établissement de session en le demandant au dispositif du réseau local, par transmission d'une demande de connexion.

Dans une étape E3 du procédé d'administration, l'équipement d'administration 41 détermine qu'un établissement de session avec le dispositif 31 est requis et obtient de la base de données les données de connexion concernant le dispositif à contacter.

Dans une étape E4 du procédé d'administration, l'équipement d'administration 41 vérifie que l'adresse universelle est une adresse publique, c'est-à-dire une adresse unique et acheminable à partir du réseau Internet.

Si tel est le cas, l'équipement d'administration 41 transmet au dispositif à contacter par l'intermédiaire du réseau d'accès 1 une requête GET selon le protocole http (pour «Hyper Text Transfer Protocol ») à l'adresse universelle ConnectionRequestURL, conformément à ce qui est décrit dans le rapport technique TR-069.

Si l'adresse universelle fournie par le dispositif à administrer est une adresse privée, l'équipement d'administration 41 vérifie si un numéro de contact dans le réseau de signalisation 2 est associé au dispositif 31 dans une étape E5 du procédé d'administration.

Si aucun numéro de contact n'est associé au dispositif, la deuxième phase se termine sans établissement de session avec le dispositif à administrer.

Si un numéro de contact est associé au dispositif 31 à administrer, dans une étape E6 du procédé d'administration, l'équipement d'administration 41 déclenche un envoi d'un message de signalisation portant une demande de connexion au numéro de contact dans le réseau de signalisation 2 du dispositif 31. Le message de signalisation peut correspondre à un message court ou SMS (pour « Short Message Service »), une donnée de service supplémentaire non structurée ou USSD (pour « Unstructured Supplementary Service Data »), un message court multimédia ou MMS (pour « Multimedia Message Service »). Cet envoi du message de signalisation est représenté sur les figures 1 et 2 sous la forme d'un message M2 transmis à partir d'un module de signalisation associé à l'équipement d'administration 41.

Ce message de demande de connexion est reçu dans une étape F2 du procédé d'établissement de session par le dispositif 31.

Dans une étape F3 du procédé d'établissement, le dispositif 31 identifie que la demande de connexion a bien pour origine l'équipement d'administration 41. Plus précisément, le dispositif 31 vérifie une donnée d'identification associée au message de signalisation reçu.

Dans un mode de réalisation particulier, la donnée d'identification est le numéro de contact associé à l'équipement d'administration 41.

Dans un autre mode de réalisation, la donnée d'identification est une information contenue dans le message de signalisation. L'équipement d'administration 41 peut ainsi inclure un numéro international d'abonné IMSI (pour « International Mobile Subscriber Number »), un identifiant ou alias, un mot de passe ou toute autre information permettant au dispositif d'identifier l'origine de la demande de connexion.

Lorsque la demande de connexion a bien pour origine l'équipement d'administration 41, le dispositif 31 traite cette demande de connexion comme s'il s'agissait d'une demande de connexion conforme au protocole http qui aurait été reçue à l'adresse universelle ConnectionRequestURL par l'intermédiaire du réseau d'accès 1. Le dispositif 31 déclenche le réveil de la couche de communication TR-069 et établit alors une session avec l'équipement d'administration 41 par l'intermédiaire du réseau d'accès 1 en se présentant avec un événement « 6 CONNECTION REQUEST », Inform(« 6 CONNECTION REQUEST »). Cet établissement de session est représenté sur les figures 1 et 2 sous la forme d'un message M3 transmis du dispositif à administrer à l'équipement d'administration 41. On constate ainsi que dans le mode de réalisation décrit, une demande de connexion est transmise au dispositif à administrer au moyen d'un protocole différent du protocole http et par l'intermédiaire d'un support réseau différent, i.e. le réseau de signalisation 2 au lieu du réseau d'accès 1.

Dans une étape E7 du procédé d'administration, l'équipement d'administration 41 reçoit ce message Inform(« 6 CONNECTION REQUEST ») et met ensuite en œuvre l'opération d'administration requise.

Ceci permet de déclencher un établissement de session par un dispositif même lorsqu'il ne dispose pas d'une adresse publique. Les problèmes associés à la présence d'un dispositif traducteur d'adresse sont ainsi résolus de manière simple, sans requérir la mise en œuvre de mécanismes complexes au niveau du dispositif du réseau local.

Les procédés ont été décrits pour un dispositif du réseau local. Dans un mode de réalisation particulier, la passerelle est équipée d'une carte SIM et peut être alors considérée comme un dispositif du réseau local.

Le procédé d'administration a été décrit dans un mode de réalisation particulier où le numéro de contact est utilisé lorsque l'adresse universelle est une adresse publique. Dans d'autres modes de réalisation, l'étape E4 du procédé d'administration n'est pas mise en œuvre.

Dans un premier mode de réalisation, l'adresse universelle est utilisée systématiquement pour envoyer une demande de connexion par l'intermédiaire du réseau d'accès 1. L'établissement d'une session par le dispositif, en réponse à cette demande de connexion, est supervisé par une temporisation. Lorsque cette temporisation expire, l'équipement d'administration 41 met alors les étapes E5 et E6 décrites précédemment, afin d'envoyer une demande de connexion au moyen du numéro de contact par l'intermédiaire du réseau de signalisation.

Dans un deuxième mode de réalisation, dès lors qu'un numéro de contact a été fourni par le dispositif lors de la phase d'enregistrement, il est utilisé pour envoyer une demande de connexion par l'intermédiaire du réseau de signalisation.

Les procédés d'administration et d'établissement de session ont été décrits pour un dispositif du réseau local, disposant d'un premier moyen de communication par l'intermédiaire d'une passerelle d'accès fixe et d'un moyen de communication avec un réseau mobile.

On rappelle ici que dans un des modes de réalisation décrits précédemment, la passerelle d'accès permet un accès au réseau d'accès fixe et un accès au réseau d'accès mobile.

Les exemples suivants non exhaustifs illustrent la mise en œuvre des procédés décrits précédemment dans d'autres environnements.

On se place dans le cas particulier où la passerelle est une passerelle d'accès mobile de type 3G ou 4G. Une telle passerelle permet d'offrir un accès au réseau Internet à des dispositifs mobiles qui se situent dans sa zone de couverture radio. Les dispositifs mobiles accédant au réseau de communication par l'intermédiaire de cette passerelle d'accès mobile ne disposent pas d'adresse publique. Lorsque l'utilisateur du dispositif mobile souhaite déclencher une mise à jour par exemple de son logiciel, il est nécessaire avec les mécanismes prévus actuellement dans le rapport technique TR-069 d'attendre que le dispositif mobile se présente spontanément, lors d'un redémarrage ou bien de manière périodique, auprès de l'équipement d'administration pour que cette mise à jour puisse avoir lieu. En contactant le dispositif mobile au moyen de son numéro de contact, il est alors possible d'effectuer cette mise à jour immédiatement. La passerelle d'accès mobile peut par ailleurs elle-même ne pas disposer d'adresse publique. Il est alors possible de la contacter au moyen de son propre numéro de contact.

Dans un autre exemple, le dispositif à administrer est également agencé pour se connecter au réseau Internet par l'intermédiaire du réseau d'accès 2, par exemple un réseau mobile. En cas de disfonctionnement de l'accès au réseau Internet par l'intermédiaire du réseau d'accès fixe, l'établissement de session s'effectue par l'intermédiaire du réseau d'accès mobile et l'utilisateur du dispositif bénéficie alors des fonctionnalités d'administration et notamment de celles de diagnostic permettant de rétablir la configuration de l'accès au réseau Internet par l'intermédiaire du réseau d'accès fixe.

Nous allons maintenant décrire un dispositif 31 appartenant à un réseau de communication privé dans un mode particulier de réalisation de l'invention en référence à la figure 3. Un tel dispositif est agencé pour être administré à distance par un équipement d'administration 41 et comprend notamment :
- un module de communication 300, agencé pour communiquer avec l'équipement d'administration ;
- un module d'envoi 302, agencé pour envoyer des données d'administration à l'équipement d'administration par l'intermédiaire d'un réseau d'accès, lesdites données d'administration comprenant une première donnée de connexion ;
- un module de réception 304, agencé pour recevoir en provenance de l'équipement d'administration une demande de connexion, ladite demande de connexion déclenchant l'établissement de la session par l'intermédiaire du réseau d'accès.

Le dispositif 31 est également agencé pour accueillir une carte d'identification d'abonné USIM, à laquelle est associée un numéro de contact dans un réseau de signalisation, et pour communiquer des données par l'intermédiaire du réseau de signalisation.

Le module d'envoi 302 est en outre agencé pour envoyer dans les données d'administration le numéro de contact associé au dispositif en tant que deuxième donnée de connexion.

Le module de réception 304 est agencé pour recevoir une demande de connexion au moyen de la première donnée de connexion et pour établir une session avec l'équipement d'administration 41 par l'intermédiaire du réseau d'accès. Il est également agencé pour recevoir une demande de connexion au moyen du numéro de contact dans le réseau de signalisation et pour réveiller la couche de communication TR-069 pour établir la session avec l'équipement d'administration 41 par l'intermédiaire du réseau d'accès.

Dans un mode de réalisation particulier, le module de réception 304 est en outre agencé pour recevoir une donnée d'identification associée à la demande de connexion et pour vérifier à partir de cette donnée d'identification que la demande de connexion a été envoyée par l'équipement d'administration.

Nous allons maintenant décrire un équipement d'administration 41 dans un mode particulier de réalisation de l'invention en référence à la figure 4. Un tel équipement d'administration comprend notamment :
- un module de communication 400, agencé pour communiquer avec des dispositifs à administrer ;
- un module de réception 402, agencé pour recevoir des données d'administration en provenance d'un dispositif par l'intermédiaire d'un réseau d'accès, lesdites données d'administration comprenant une première donnée de connexion ;
- un module d'envoi 404, agencé pour envoyer à un dispositif à administrer une demande de connexion, ladite demande de connexion déclenchant un établissement d'une session par le dispositif avec l'équipement d'administration par l'intermédiaire du réseau d'accès ;
- une zone mémoire 406, agencée pour mémoriser sous forme d'une base de données des données d'administration reçues en association avec un identifiant du dispositif concerné.

Le module de réception 402 est en outre agencé pour recevoir dans les données d'administration un numéro de contact associé au dispositif dans un réseau de signalisation en tant que deuxième donnée de connexion et pour le mémoriser dans la zone mémoire 406 avec les autres données d'administration reçues.

Le module d'envoi 404 est alors agencé pour transmettre la demande de connexion au dispositif à administrer par l'intermédiaire du réseau de signalisation au moyen du numéro de contact reçu.

Dans un mode de réalisation particulier, le module d'envoi 404 est en outre agencé pour vérifier que la première donnée de connexion est une adresse privée avant envoi de la demande de connexion au numéro de contact. Lorsque la première donnée de connexion est une adresse publique, le module d'envoi 404 est agencé pour transmettre la demande de connexion à destination de la première donnée de connexion par l'intermédiaire du réseau d'accès.

Dans un mode de réalisation particulier, le module d'envoi 404 est en outre agencé pour associer une donnée d'identification à la demande de connexion, cette donnée d'identification permettant au dispositif de vérifier que la demande de connexion a été envoyée par l'équipement d'administration.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 302, 304 sont agencés pour mettre en œuvre le procédé d'établissement de session précédemment décrit. Il s'agit de préférence de modules logiciels comprenant des instructions logicielles pour faire exécuter les étapes du procédé d'établissement de session précédemment décrit, mises en œuvre par un dispositif d'un réseau privé. L'invention concerne donc aussi :
- un programme pour un dispositif, comprenant des instructions de code de programme destinées à commander l'exécution des étapes du procédé d'établissement de session précédemment décrit, lorsque ledit programme est exécuté par ledit dispositif ;
- un support d'enregistrement lisible par un dispositif sur lequel est enregistré le programme pour un dispositif.

Dans un mode de réalisation particulier, les modules 402, 404 sont agencés pour mettre en œuvre le procédé d'administration précédemment décrit. Il s'agit de préférence de modules logiciels comprenant des instructions logicielles pour faire exécuter les étapes du procédé d'administration précédemment décrit, mises en œuvre par un équipement d'administration. L'invention concerne donc aussi :
- un programme pour un équipement d'administration, comprenant des instructions de code de programme destinées à commander l'exécution des étapes du procédé d'administration précédemment décrit, lorsque ledit programme est exécuté par ledit équipement d'administration ;
- un support d'enregistrement lisible par un équipement d'administration sur lequel est enregistré le programme pour un équipement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'administration à distance par un équipement d'administration (41) d'un dispositif (30-37) appartenant à un réseau de communication privé (3), dans lequel les étapes suivantes sont mises en œuvre par l'équipement d'administration :
- réception (E1) de données d'administration en provenance du dispositif par l'intermédiaire d'un réseau d'accès, lesdites données d'administration comprenant une première donnée de connexion, la première donnée de connexion étant une adresse à utiliser par l'équipement d'administration pour transmettre une demande de connexion au dispositif ;
- envoi (E6) au dispositif d'une demande de connexion, ladite demande de connexion déclenchant un établissement d'une session par le dispositif avec l'équipement d'administration par l'intermédiaire du réseau d'accès,
**caractérisé en ce que**, un numéro de contact étant associé au dispositif dans un réseau de signalisation, les données d'administration reçues comprennent en outre ledit numéro de contact du dispositif en tant que deuxième donnée de connexion et **en ce que** la demande de connexion est transmise au dispositif par l'intermédiaire du réseau de signalisation au moyen du numéro de contact reçu.

2. Procédé d'administration à distance selon la revendication 1, dans lequel, la transmission de la demande de connexion au moyen du numéro de contact reçu est effectuée lorsque ladite adresse à utiliser est une adresse privée (E4) dans le réseau privé.

3. Procédé d'administration à distance selon la revendication 1, dans lequel une donnée d'identification est associée à la demande de connexion, ladite donnée d'identification permettant au dispositif de vérifier que la demande de connexion a été envoyée par l'équipement d'administration.

4. Procédé d'établissement d'une session par un dispositif (30-37) appartenant à un réseau de communication privé (3) avec un équipement d'administration (41) pour une administration à distance dudit dispositif, ledit procédé comprenant les étapes suivantes mises en œuvre par le dispositif :
- envoi (F1) de données d'administration à l'équipement d'administration par l'intermédiaire d'un réseau d'accès, lesdites données d'administration comprenant une première donnée de connexion, la première donnée de connexion étant une adresse à utiliser par l'équipement d'administration pour transmettre une demande de connexion au dispositif ;
- réception (F2) en provenance de l'équipement d'administration d'une demande de connexion, ladite demande de connexion déclenchant l'établissement de la session par l'intermédiaire du réseau d'accès,
**caractérisé en ce que**, un numéro de contact étant associé au dispositif dans un réseau de signalisation, les données d'administration envoyées comprennent en outre ledit numéro de contact en tant que deuxième donnée de connexion et **en ce que** la demande de connexion est reçue par le dispositif par l'intermédiaire du réseau de signalisation au moyen dudit numéro de contact envoyé.

5. Procédé d'établissement selon la revendication 4, dans lequel, préalablement à l'établissement de la session, le dispositif vérifie (F3) à l'aide d'une information d'identification associée à la demande de connexion que la demande de connexion reçue a été envoyée par l'équipement d'administration.

6. Equipement d'administration (41) à distance d'un dispositif (30-37) appartenant à un réseau de communication privé (3), ledit équipement comprenant :
- un module de réception (402) de données d'administration en provenance d'un dispositif par l'intermédiaire d'un réseau d'accès, lesdites données d'administration comprenant une première donnée de connexion, la première donnée de connexion étant une adresse à utiliser par l'équipement d'administration pour transmettre une demande de connexion au dispositif ;
- un module d'envoi (404) au dispositif d'une demande de connexion, ladite demande de connexion déclenchant un établissement d'une session par le dispositif avec l'équipement d'administration par l'intermédiaire du réseau d'accès,
**caractérisé en ce que**, un numéro de contact étant associé au dispositif dans un réseau de signalisation, les données d'administration reçues comprennent en outre ledit numéro de contact du dispositif en tant que deuxième donnée de connexion et **en ce que** la demande de connexion est transmise au dispositif par l'intermédiaire du réseau de signalisation au moyen du numéro de contact reçu.

7. Dispositif (30-37) appartenant à un réseau de communication privé (3), agencé pour être administré à distance par un équipement d'administration (41), ledit dispositif comprenant :
- un module d'envoi (302) de données d'administration à l'équipement d'administration par l'intermédiaire d'un réseau d'accès, lesdites données d'administration comprenant une première donnée de connexion, la première donnée de connexion étant une adresse à utiliser par l'équipement d'administration pour transmettre une demande de connexion au dispositif ;
- un module de réception (304) en provenance de l'équipement d'administration d'une demande de connexion, ladite demande de connexion déclenchant l'établissement de la session par l'intermédiaire du réseau d'accès,
**caractérisé en ce que**, un numéro de contact étant associé au dispositif dans un réseau de signalisation, les données d'administration envoyées comprennent en outre ledit numéro de contact en tant que deuxième donnée de connexion et **en ce que** la demande de connexion est reçue par le dispositif par l'intermédiaire du réseau de signalisation au moyen dudit numéro de contact envoyé.

8. Programme pour un équipement d'administration, comprenant des instructions de code de programme destinées à commander l'exécution des étapes du procédé d'administration selon l'une des revendications 1 à 3, lorsque ledit programme est exécuté par ledit équipement.

9. Support d'enregistrement lisible par un équipement d'administration sur lequel est enregistré le programme selon la revendication 8.

10. Programme pour un dispositif appartenant à un réseau privé, comprenant des instructions de code de programme destinées à commander l'exécution des étapes du procédé d'établissement de session selon l'une des revendications 4 ou 5, lorsque ledit programme est exécuté par ledit dispositif.

11. Support d'enregistrement lisible par un dispositif appartenant à un réseau privé sur lequel est enregistré le programme selon la revendication 10.

## Patentansprüche

1. Verfahren zur Fernverwaltung einer zu einem privaten Kommunikationsnetz (3) gehörenden Vorrichtung (30-37) durch eine Verwaltungsausrüstung (41), bei dem die folgenden Schritte von der Verwaltungsausrüstung durchgeführt werden:
- Empfang (E1) von von der Vorrichtung kommenden Verwaltungsdaten über ein Zugangsnetz, wobei die Verwaltungsdaten einen ersten Verbindungsdatenwert enthalten, wobei der erste Verbindungsdatenwert eine von der Verwaltungsausrüstung zu verwendende Adresse ist, um eine Verbindungsanforderung an die Vorrichtung zu übertragen;
- Senden (E6) einer Verbindungsanforderung an die Vorrichtung, wobei die Verbindungsanforderung einen Aufbau einer Sitzung durch die Vorrichtung mit der Verwaltungsausrüstung über das Zugangsnetz auslöst,
**dadurch gekennzeichnet, dass**, da eine Kontaktnummer der Vorrichtung in einem Signalisierungsnetz zugeordnet ist, die empfangenen Verwaltungsdaten außerdem die Kontaktnummer der Vorrichtung als zweiten Verbindungsdatenwert enthalten, und dass die Verbindungsanforderung mittels der empfangenen Kontaktnummer über das Signalisierungsnetz an die Vorrichtung übertragen wird.

2. Fernverwaltungsverfahren nach Anspruch 1, wobei die Übertragung der Verbindungsanforderung mittels der empfangenen Kontaktnummer ausgeführt wird, wenn die zu benutzende Adresse eine private Adresse (E4) im privaten Netz ist.

3. Fernverwaltungsverfahren nach Anspruch 1, wobei der Verbindungsanforderung ein Identifikationsdatenwert zugeordnet ist, wobei der Identifikationsdatenwert es der Vorrichtung ermöglicht zu überprüfen, dass die Verbindungsanforderung von der Verwaltungsausrüstung geschickt wurde.

4. Verfahren zum Aufbau einer Sitzung durch eine zu einem privaten Kommunikationsnetz (3) gehörende Vorrichtung (30-37) mit einer Verwaltungsausrüstung (41) für eine Fernverwaltung der Vorrichtung, wobei das Verfahren die folgenden Schritte enthält, die von der Vorrichtung durchgeführt werden:
- Senden (F1) von Verwaltungsdaten an die Verwaltungsausrüstung über ein Zugangsnetz, wobei die Verwaltungsdaten einen ersten Verbindungsdatenwert enthalten, wobei der erste Verbindungsdatenwert eine von der Verwaltungsausrüstung zu verwendende Adresse ist, um eine Verbindungsanforderung an die Vorrichtung zu übertragen;
- Empfang (F2) einer von der Verwaltungsausrüstung kommenden Verbindungsanforderung, wobei die Verbindungsanforderung den Aufbau der Sitzung über das Zugangsnetz auslöst,
**dadurch gekennzeichnet, dass**, da eine Kontaktnummer der Vorrichtung in einem Signalisierungsnetz zugeordnet ist, die geschickten Verwaltungsdaten außerdem die Kontaktnummer als zweiten Verbindungsdatenwert enthalten, und dass die Verbindungsanforderung von der Vorrichtung über das Signalisierungsnetz mittels der geschickten Kontaktnummer empfangen wird.

5. Aufbauverfahren nach Anspruch 4, wobei die Vorrichtung vor dem Aufbau der Sitzung mit Hilfe einer der Verbindungsanforderung zugeordneten Identifikationsinformation überprüft (F3), dass die empfangene Verbindungsanforderung von der Verwaltungsausrüstung geschickt wurde.

6. Fernverwaltungsausrüstung (41) einer zu einem privaten Kommunikationsnetz (3) gehörenden Vorrichtung (30-37), wobei die Ausrüstung enthält:
- ein Empfangsmodul (402) von von einer Vorrichtung kommenden Verwaltungsdaten über ein Zugangsnetz, wobei die Verwaltungsdaten einen ersten Verbindungsdatenwert enthalten, wobei der erste Verbindungsdatenwert eine von der Verwaltungsausrüstung zu verwendende Adresse ist, um eine Verbindungsanforderung an die Vorrichtung zu übertragen;
- ein Sendemodul (404) einer Verbindungsanforderung an die Vorrichtung, wobei die Verbindungsanforderung einen Aufbau einer Sitzung durch die Vorrichtung mit der Verwaltungsausrüstung über das Zugangsnetz auslöst,
**dadurch gekennzeichnet, dass**, da eine Kontaktnummer der Vorrichtung in einem Signalisierungsnetz zugeordnet ist, die empfangenen Verwaltungsdaten außerdem die Kontaktnummer der Vorrichtung als zweiten Verbindungsdatenwert enthalten, und dass die Verbindungsanforderung über das Signalisierungsnetz mittels der empfangenen Kontaktnummer an die Vorrichtung übertragen wird.

7. Vorrichtung (30-37), die zu einem privaten Kommunikationsnetz (3) gehört, eingerichtet, um von einer Verwaltungsausrüstung (41) fernverwaltet zu werden, wobei die Vorrichtung enthält:
- ein Sendemodul (302) von Verwaltungsdaten an die Verwaltungsausrüstung über ein Zugangsnetz, wobei die Verwaltungsdaten einen ersten Verbindungsdatenwert enthalten, wobei der erste Verbindungsdatenwert eine von der Verwaltungsausrüstung zur Übertragung einer Verbindungsanforderung an die Vorrichtung zu verwendende Adresse ist;
- ein Empfangsmodul (304) einer von der Verwaltungsausrüstung kommenden Verbindungsanforderung, wobei die Verbindungsanforderung den Aufbau der Sitzung über das Zugangsnetz auslöst,
**dadurch gekennzeichnet, dass**, da eine Kontaktnummer der Vorrichtung in einem Signalisierungsnetz zugeordnet ist, die geschickten Verwaltungsdaten außerdem die Kontaktnummer als zweiten Verbindungsdatenwert enthalten, und dass die Verbindungsanforderung von der Vorrichtung über das Signalisierungsnetz mittels der geschickten Kontaktnummer empfangen wird.

8. Programm für eine Verwaltungsausrüstung, das Programmcodeanweisungen enthält, die dazu bestimmt sind. die Ausführung der Schritte des Verwaltungsverfahrens nach einem der Ansprüche 1 bis 3 zu steuern, wenn das Programm von der Ausrüstung ausgeführt wird.

9. Speicherträger, lesbar von einer Verwaltungsausrüstung, auf dem das Programm nach Anspruch 8 gespeichert ist.

10. Programm für eine zu einem privaten Netz gehörende Vorrichtung, das Programmcodeanweisungen enthält, die dazu bestimmt sind, die Ausführung der Schritte des Aufbauverfahrens einer Sitzung nach einem der Ansprüche 4 oder 5 zu steuern, wenn das Programm von der Vorrichtung ausgeführt wird.

11. Speicherträger, lesbar von einer zu einem privaten Netz gehörenden Vorrichtung, auf dem das Programm nach Anspruch 10 gespeichert ist.

## Claims

1. Method for remote administration by an administration apparatus (41) of a device (30-37) belonging to a private communication network (3), in which the following steps are implemented by the administration apparatus:
- receiving (E1) administration data from the device via an access network, said administration data including a first item of connection data, the first item of connection data being an address to be used by the administration apparatus for transmitting a connection request to the device;
- sending (E6) to the device a connection request, said connection request triggering an establishment of a session by the device with the administration apparatus via the access network,
**characterized in that**, a contact number being associated with the device in a signalling network, the received administration data further include said contact number of the device as a second item of connection data and **in that** the connection request is transmitted to the device via the signalling network by means of the received contact number.

2. Remote administration method according to Claim 1, in which the transmission of the connection request by means of the received contact number is performed when said address to be used is a private address (E4) in the private network.

3. Remote administration method according to Claim 1, in which an item of identification data is associated with the connection request, said item of identification data enabling the device to check that the connection request has been sent by the administration apparatus.

4. Method for establishing a session by a device (30-37) belonging to a private communication network (3) with an administration apparatus (41) for a remote administration of said device, said method including the following steps implemented by the device:
- sending (F1) administration data to the administration apparatus via an access network, said administration data including a first item of connection data, the first item of connection data being an address to be used by the administration apparatus for transmitting a connection request to the device;
- receiving (F2) from the administration apparatus a connection request, said connection request triggering the establishment of the session via the access network,
**characterized in that**, a contact number being associated with the device in a signalling network, the sent administration data further include said contact number as a second item of connection data and **in that** the connection request is received by the device via the signalling network by means of said sent contact number.

5. Establishment method according to Claim 4, in which, prior to the establishment of the session, the device (F3), with the aid of an item of identification information associated with the connection request, checks that the received connection request has been sent by the administration apparatus.

6. Apparatus for remote administration (41) of a device (30-37) belonging to a private communication network (3), said apparatus including:
- a module for receiving (402) administration data from a device via an access network, said administration data including a first item of connection data, the first item of connection data being an address to be used by the administration apparatus for transmitting a connection request to the device;
- a module for sending (404) a connection request to the device, said connection request triggering an establishment of a session by the device with the administration apparatus via the access network, **characterized in that**, a contact number being associated with the device in a signalling network, the received administration data further include said contact number of the device as a second item of connection data and **in that** the connection request is transmitted to the device via the signalling network by means of the received contact number.

7. Device (30-37) belonging to a private communication network (3), arranged for being remotely administered by an administration apparatus (41), said device including:
- a module for sending (302) administration data to the administration apparatus via an access network, said administration data including a first item of connection data, the first item of connection data being an address to be used by the administration apparatus for transmitting a connection request to the device;
- a module for receiving (304) from the administration apparatus a connection request, said connection request triggering the establishment of the session via the access network,
**characterized in that**, a contact number being associated with the device in a signalling network, the sent administration data further include said contact number as a second item of connection data and **in that** the connection request is received by the device via the signalling network by means of said sent contact number.

8. Program for an administration apparatus, including program code instructions intended to control the execution of the steps of the administration method according to one of Claims 1 through 3, when said program is executed by said apparatus.

9. Recording medium readable by an administration apparatus on which the program according to Claim 8 is recorded.

10. Program for a device belonging to a private network, including program code instructions intended to control the execution of the steps of the session establishment method according to one of Claims 4 and 5, when said program is executed by said device.

11. Recording medium readable by a device belonging to a private network on which the program according to Claim 10 is recorded.
